# EUROPÄISCHE PATENTANMELDUNG

(11) **EP 3 050 418 A1**
(43) Veröffentlichungstag der Anmeldung: **03.08.2016**
(21) Anmeldenummer: 16152423.6
(22) Anmeldetag: 22.01.2016
(51) Int. Cl.: A01C 7/04, A01C 7/10, A01C 7/20

(54) **DOSIERSYSTEM EINER LANDWIRTSCHAFTLICHEN MASCHINE**

(30) Priorität: 28.01.2015 DE 102015101255; 28.01.2015 DE 102015101256
(71) Anmelder: Horsch Maschinen GmbH, 92421 Schwandorf (DE)
(72) Erfinder: HORSCH, Philipp, 92421 Schwandorf (DE); PIRKENSEER, Manfred, 92421 Schwandorf (DE)
(74) Vertreter: Benninger, Johannes

(57) **Zusammenfassung**

Es ist ein Dosiersystem (22) für eine Reiheneinheit (10) einer landwirtschaftlichen Maschine zur vereinzelten Abgabe von Körnern (46) wie Saatgut und/oder Dünger offenbart. Das Dosiersystem (22) umfasst wenigstens zwei Dosiervorrichtungen (24, 26), wobei die wenigstens zwei Dosiervorrichtungen (24, 26) wenigstens eine Kammer (44) zur Aufnahme der auszubringenden Körner (46) umfassen, und wobei in der wenigstens einen Kammer (44) ein definiertes Druckniveau oberhalb eines Umgebungsdrucks herrscht. Weiter sind wenigstens zwei Dosierorgane (48) zur Begrenzung der wenigstens einen Kammer (44) vorgesehen, wobei die wenigstens zwei Dosierorgane (48) jeweils im Gehäuse (30) der wenigstens zwei Dosiervorrichtung (24, 26) drehbar angeordnet sind und in regelmäßigen Abständen auf einer Kurvenbahn Aussparungen (52) zur Aufnahme von Körnern (46) aufweisen. Weiter ist wenigstens ein Kornabgabebereich (54) vorgesehen, welcher durch die wenigstens eine Kammer (44) und der wenigstens zwei Dosierorgane (48) definiert ist. Der erfindungsgemäße Gegenstand zeichnet sich dadurch aus, dass dem wenigstens einem Kornabgabebereich (54) mindestens ein Saatguteinlasselement (27) zur Aufnahme und Transport der vereinzelten Körner (46) zu einer Saatgutdosierleitung (28) zur Abgabe der vereinzelten Körner (46) in einer mittels Bodenbearbeitungswerkzeugen erzeugten Saatfurche in den Boden zugeordnet ist, wobei dem wenigstens einem Saatguteinlasselement (27) und/oder der Saatgutdosierleitung (28) eine Druckbeaufschlagungseinrichtung zugeordnet ist, mittels welcher wenigstens ein Luftstrom zur aktiven Beschleunigung der Körner (46) erzeugbar ist.

## Beschreibung

Die vorliegende Erfindung betrifft ein Dosiersystem für eine Reiheneinheit einer landwirtschaftlichen Maschine zur vereinzelten Abgabe von körnigem Gut mit den Merkmalen des unabhängigen Anspruchs 1.

In der Landwirtschaft sind eine Vielzahl von Verfahren, Methoden bzw. Maschinen bekannt, um Saatgüter und Dünger in granulatartiger Form möglichst gleichmäßig auf einer landwirtschaftlichen Fläche auszubringen bzw. zu verteilen. Eine Art dieser Maschinen wird als Einzelkornmaschine bezeichnet. Bei Einzelkornmaschinen können mittels Dosiervorrichtungen die granulatartigen Körner vereinzelt und in regelmäßigen Abständen in eine Saatfurche abgelegt werden. Die Saatfurche wird in der Regel mittels entsprechenden Furchenwerkzeugen erzeugt. Aufgrund dessen haben in etwa alle Körner den gleichen Standraum, wodurch eine gleichmäßige Entwicklung der Pflanzen erreicht werden kann.

Neben dem Standraum ist für die Pflanzenentwicklung auch die Wahl des für den jeweiligen Standort am besten geeignetsten Saatguts entscheidend. So gibt es bspw. Saatgutsorten, welche für eher trockene und welche eher für feuchte Bodenbedingungen geeignet sind. Auch eignen sich manche Saatgutsorten eher für schwere tonartige Böden und andere für eher leichte sandige Böden. Da jedoch die Bodenbedingungen, insbesondere bei Feldern mit einer großen Fläche, häufig unterschiedlich sein können, wäre es wünschenswert, wenn die Saatgutsorten innerhalb des Feldes in Abhängigkeit der jeweiligen Bodenbedingungen variiert werden kann.

Hierfür sind aus dem Stand der Technik bereits diverse Lösungsansätze bekannt. So beschreibt die US 6 672 228 B1 ein Dosiersystem für eine Reiheneinheit, wobei das Dosiersystem zwei Dosiervorrichtungen umfasst. Den Dosiervorrichtungen können jeweils bspw. mittels eines Karussells unterschiedliche Saatgutsorten zugeführt werden. Nach Vereinzelung des Saatguts erfolgt eine vereinzelte Kornabgabe in ein Saatrohr, so dass das Saatgut in eine Saatfurche transportiert wird. Bei einem Wechsel der Kornabgabe in das Saatrohr von der ersten Dosiervorrichtung auf die zweite Dosiervorrichtung können diese jeweils mittels eines Schlittens axial verschoben werden. Die Vorrichtung zeichnet sich dadurch aus, dass bei einer vereinzelten Kornabgabe der ersten Dosiervorrichtung die zweite Dosiervorrichtung keine Vereinzelung durchführt und umgekehrt, d.h. es ist jeweils nur eine Dosiervorrichtung aktiv.

Zwar lassen sich somit verschiedene Saatgutsorten ausbringen, aber aufgrund des Verschiebens der Dosiervorrichtung und des Karussells ist ein schneller Wechsel zwischen den beiden Dosiervorrichtung bzw. den verschiedenen Saatgutsorten nicht möglich. Bei hohen Fahrgeschwindigkeiten und einem häufigen Saatgutwechsel können aufgrund der zeitlichen Inanspruchnahme hinsichtlich des Verschiebens der Dosiervorrichtungen Ungenauigkeiten in der Kornabgabe erfolgen. Ebenso ist die Gestaltung der Reiheneinheit mit Schlitten und Karussell sehr aufwendig und damit auch entsprechend kostenintensiv. Zudem besteht bei der Kornabgabe das Problem, dass diese im Saatrohr im freien Fall erfolgt. Durch Vibrationen und Stöße, welche während der Feldfahrt auf die Reiheneinheit wirken, kann es zu einem Verspringen der Körner im Saatrohr bzw. zu einem Anstoßen der Körner im Saatrohr kommen. Auch hieraus kann eine ungleichmäßige Kornabgabe resultieren.

Eine weitere Dosiervorrichtung, mittels derer Saatgüter unterschiedlich dosiert bzw. vereinzelt werden können, ist aus der US 7 765 943 B2 bekannt. Bei dieser Vorrichtung kann das Saatgut mittels einer Zellenradschleuse volumetrisch dosiert oder mittels eines Dosierorgans vereinzelt werden. Die Saatgutzufuhr wird über einen Schlitten geregelt, wonach je nach Stellung des Schlittens entweder eine volumetrische Dosierung oder eine Vereinzelung des Saatguts erfolgt.

Eine weitere landwirtschaftliche Maschine mit zwei Dosiervorrichtungen wurde durch die in den USA ansässige Firma "Kinze Manufacturing Inc." bekannt. In deren sog. Multi-Hybrid Planter 4900 weisen zwei Dosiervorrichtungen einen gemeinsamen Kornabgabebereich auf. Die Dosiervorrichtungen werden jeweils mittels eines Unterdrucksystems betrieben. Nach Abgabe der Körner von einem Dosierorgan werden diese im freien Fall durch eine Saatgutdosierleitung in eine Saatfurche abgelegt. Der Wechsel zwischen den Dosiervorrichtungen bzw. den Saatgutsorten erfolgt bspw. mittels GPS-Daten. Unterdruckbasierende Dosiervorrichtungen weisen jedoch den Nachteil auf, dass diese sehr schmutzempfindlich sind. Besonders Schmutzpartikel können durch den Unterdruck in der Dosiervorrichtung angesaugt werden, was zu einer Störfunktion führen kann.

Aus der WO 2014 113 803 A1 ist darüber hinaus ebenfalls ein Dosiersystem für eine Reiheneinheit bekannt. Diesem Dosiersystem können wenigstens zwei verschiedene Saatgutsorten zugeführt werden, wobei jeweils mit der Dosiervorrichtung nur ein Saatgut ausgebracht werden kann. Dieses System hat jedoch aufgrund der nur einen vorhandenen Dosiervorrichtung den Nachteil, dass ein schneller Wechsel zwischen den Saatgutsorten nicht möglich ist. Vielmehr muss jeweils eine Vorlaufzeit definiert werden, um somit die Zeit, welche das Saatgut vom zentralen Saatguttank bis zur Dosiervorrichtung benötigt, mit einzurechnen. Ein solches System ist jedoch sehr aufwendig und ebenso fehlerbehaftet, wenn die Zeiten nicht richtig gewählt wurden.

Aus der WO 2014/205454 A1 ist ein weiteres Dosiersystem bekannt, welches zwei Dosiervorrichtungen umfasst. Die zwei Dosiervorrichtungen sind zueinander beabstandet angeordnet und nutzen jeweils das Vakuumprinzip. Aufgrund dessen können die Körner von den Aussparungen der Dosierorgane aufgenommen werden. Anschließend können die von den Aussparungen festgesetzten Körner mittels des Schwerkraftprinzips in eine gemeinsame Saatgutdosierleitung bzw. jeweils in zwei einzelne Saatgutdosierleitungen fallen.

Auch sind aus dem Stand der Technik Systeme bekannt, bei denen bspw. zwei Saatflussströme mittels eines Y-Stückes verbunden werden, wobei diese in der Regel volumetrisch dosiert wurden. Ebenso erfolgt bislang eine Verbindung der Saatflussströme nicht synchronisiert, d.h. es konnte keine Einzelkornabgabe gewährleistet werden. Auch ist bereits bekannt, dass bspw. Mikrogranulate in einem Einzelkornsaatfluss beigemengt werden. Nach derzeitigem Stand kann auch hier keine vereinzelte Kornabgabe beider Stoffe gewährleistet werden. Zudem kann gegebenenfalls der Einzelkornfluss beeinträchtigt werden, wonach auch keine ausreichend genaue Kornablage gewährleistet werden kann.

Ziel der vorliegenden Erfindung ist es, ein Dosiersystem für eine Reiheneinheit einer landwirtschaftlichen Maschine zur Verfügung zu stellen, welchem wenigstens zwei Dosiervorrichtungen und/oder Dosierorgane zur vereinzelten Kornabgabe zugeordnet sind. Das Dosiersystem soll dabei so ausgestaltet sein, dass ein Wechsel zwischen der vereinzelten Kornabgabe der wenigstens einen ersten auf die wenigstens eine zweite Dosiervorrichtung möglichst schnell erfolgt. Gleichzeitig soll ein Verspringen der Körner im Staatrohr weitestgehend unterbunden werden. Diese Ziele der Erfindung werden mit den Merkmalen des unabhängigen Patentanspruchs 1 erreicht. Merkmale vorteilhafter Weiterbildungen der Erfindung ergeben sich aus den abhängigen Ansprüchen.

Zur Erreichung der genannten Ziele sieht die vorliegende Erfindung ein Dosiersystem für eine Reiheneinheit einer landwirtschaftlichen Maschine, vorzugsweise in Form einer Einzelkornmaschine vor. Die Reiheneinheit ist mittels eines Rahmens an die landwirtschaftliche Maschine gekoppelt, wobei die Verbindung zwischen Reiheneinheit und Rahmen über eine Stützvorrichtung erfolgt. Die Stützvorrichtung kann bspw. in Form eines Parallelogramms ausgebildet sein.

Das Dosiersystem umfasst wenigstens zwei Dosiervorrichtungen, welche an der Reiheneinheit montiert sein können. Alternativ können die wenigstens zwei Dosiervorrichtungen auch von der Reiheneinheit beabstandet sein und stattdessen der Maschine und/oder dem Rahmen der Maschine zugeordnet sein. Den wenigstens zwei Dosiervorrichtungen können über entsprechende Kornzuführungen Saatgut aus einem Saatgutvorrat zugeführt werden. Vorzugsweise werden den wenigstens zwei Dosiervorrichtungen unterschiedliche Kornarten zugeführt, um jeweils die Kornaussaat auf die unterschiedlichen Böden während einer Feldfahrt anpassen zu können.

Die wenigstens zwei Dosiervorrichtungen umfassen wenigstens eine Kammer zur Aufnahme der auszubringenden Körner. Je nach Ausführungsform können die wenigstens zwei Dosiervorrichtungen eine gemeinsame Kammer oder jeweils eine eigene Kammer aufweisen, wobei jeweils die Kammern mit dem jeweils auszubringenden Saatgut aus dem Saatgutvorrat versorgt werden. Weisen die Dosiervorrichtungen eine gemeinsame Kammer auf, so sind diese durch ein Trennelement getrennt. Das Trennelement dient dazu, dass die unterschiedlichen Saatgüter nicht vermischt werden. Als Trennelement können verschiedenste Elemente Verwendung finden, vorzugsweise derartige, dass Saatgüter nicht vermischt werden, jedoch Luft von einer Kammer in die andere strömen kann.

Die wenigstens eine Kammer zeichnet sich zudem durch ein definiertes Druckniveau oberhalb eines Umgebungsdrucks aus. Somit herrscht folglich in der wenigstens einen Kammer ein Überdruck, was durch eine entsprechende Druckbeaufschlagungseinrichtung bspw. in Form eines Überdruckgebläses erreicht werden kann. Es wäre auch vorstellbar, die gegenüberliegende Seite der Kammern mit einem Unterdruck mittels eines Unterdruckgebläses zu beaufschlagen. In jedem Fall soll die wenigstens eine Kammer bzw. die zwei Kammern so ausgestaltet sein, dass das Druckniveau P1 in der Kammer größer ist als das Druckniveau P2, welches im gegenüberliegenden Bereich der Kammer vorherrscht.

Wenn somit im Zusammenhang der vorliegenden Beschreibung von einer Druckbeaufschlagungseinrichtung die Rede ist, so ist damit generell jede Art von Überdruck- oder Unterdruckquelle gemeint, die in der Lage ist, in den Kammern den gewünschten Über- bzw. Unterdruck zu erzeugen. Ob dieser Überdruck oder Unterdruck mittels Gebläse oder auf andere Weise erzeugt und aufgebaut wird, ist für den vorliegenden Zusammenhang von untergeordneter Bedeutung.

Weiter umfasst das erfindungsgemäße Dosiersystem wenigstens zwei Dosierorgane. Die wenigstens zwei Dosierorgane sind jeweils im Gehäuse der wenigstens zwei Dosiervorrichtungen drehbar angeordnet bzw. die wenigstens zwei Dosierorgane rotieren jeweils um eine Rotationsache. Die wenigstens zwei Dosierorgane können vorzugsweise scheiben- und/oder trommel- und/oder tellerartig ausgebildet sein. Auch wäre es vorstellbar, dass in den wenigstens zwei Dosiervorrichtungen unterschiedliche Dosierorgane vorgesehen sind. Die wenigstens zwei Dosierorgane umfassen in regelmäßigen Abständen Aussparungen, welche entlang einer Kurvenbahn angeordnet sind. Diese Aussparungen können in Form von Bohrungen und/oder Langlöcher und/oder Schlitze oder dergleichen ausgeführt sein und können zur Aufnahme von einzelnen Körnern dienen, die jeweils den wenigstens zwei Dosiervorrichtungen zugeführt worden sind. Die Aussparungen können darüber hinaus in unterschiedliche Größen und Konturen ausgebildet sein, welche jeweils auf die auszubringenden Stoffe angepasst sind bzw. entsprechend ausgewählt werden können.

Durch die wenigstens zwei Dosierorgane wird eine Begrenzung der wenigstens einen Kammer ausgebildet, d.h. das Dosierorgan begrenzt jeweils die Kammern. Zudem umfasst das Dosiersystem wenigstens einen Kornabgabebereich, welcher durch die wenigstens eine Kammer und der wenigstens zwei Dosierorgane definiert ist. Mittels der Aussparungen entsteht jeweils eine Verbindung mit einem Bereich, in welchem ein geringeres Druckniveau P2 als in den Kammern vorherrscht. Somit entsteht an den Aussparungen der wenigstens zwei Dosierorgane eine Druckdifferenz. Die Druckdifferenz unterstützt die Aufnahme der Körner von den jeweiligen Aussparungen. Somit können die in der Kammer befindlichen Körner von den jeweiligen Aussparungen eines Dosierorgans aufgenommen werden und durch Rotation des Dosierorgans zu wenigstens einem Kornabgabebereich transportiert werden. Mittels entsprechender Unterbrechungselemente kann eine Druckdifferenz anschließend an den Aussparungen unterbrochen werden, wodurch die Körner aus den Aussparungen in das Saatguteinlasselement bzw. in die Saatgutdosierleitung gestoßen werden.

Während beim erfindungsgemäßen Dosiersystem mit einer gemeinsamen Kammer nur ein Kornabgabebereich ausgebildet wird, so werden beim Dosiersystem mit zwei Kammern entsprechend zwei Kornabgabebereiche ausgebildet.

Zwischen der Kornaufnahme und dem Kornabgabebereich können vorzugsweise eine Vereinzelungsvorrichtung und/oder Vereinzelungselemente angebracht sein. Die Vereinzelungsvorrichtung und/oder die Vereinzelungselemente sorgen dafür, dass überschüssige an den Aussparungen anhaftende Körner abgestoßen werden. Diese Vereinzelungsvorrichtung kann auf vielfältige Weise ausgestaltet sein, wobei diese in einer bevorzugten Ausgestaltung der durch die EP 1 928 223 B1 bekannt gewordenen entspricht, wobei auch andere Vereinzelungsvorrichtungen vorstellbar wären.

Der vorliegende Gegenstand zeichnet sich dadurch aus, dass dem wenigstens einem Kornabgabebereich mindestens ein Saatguteinlasselement zur Aufnahme und Transport der vereinzelten Körner zu einer Saatgutdosierleitung zur Abgabe der vereinzelten Körner in einer mittels Bodenbearbeitungswerkzeugen erzeugten Saatfurche in den Boden zugeordnet ist. Dabei ist dem wenigstens einem Saatguteinlasselement und/oder der Saatgutdosierleitung eine Druckbeaufschlagungseinrichtung zugeordnet, mittels welcher ein Luftstrom zur aktiven Beschleunigung der Körner erzeugbar ist.

Sofern das erfindungsgemäße Dosiersystem wenigstens eine gemeinsame Kammer und damit auch einen gemeinsamen Kornabgabebereich ausbildet, ist lediglich ein Saatguteinlasselement erforderlich. Dieses Saatguteinlasselement wird durch den oberen Abschnitt der Saatgutdosierleitung definiert.

Konkret bedeutet dies für ein Dosiersystem mit einer gemeinsamen Kammer und damit mit einem gemeinsamen Kornabgabereich Folgendes:
Die Erfindung sieht vor, dass die wenigstens zwei Dosiervorrichtungen einen gemeinsamen Kornabgabebereich aufweisen, d.h. es werden jeweils unterschiedliche Saatgutsorten von den Dosiervorrichtungen vereinzelt und zum gemeinsamen Kornabgabebereich transportiert. Anschließen wird das vereinzelt Gut dann jeweils in eine Saatgutdosierleitung geleitet, wobei der obere Abschnitt der Saatgutdosierleitung als Saatguteinlasselement definiert ist. Die Kornabgabe kann jeweils mittels nur einer Dosiervorrichtung, aber auch mittels der zwei Dosiervorrichtungen erfolgen. Eine derartige Anordnung hat den Vorteil, dass ein schnelles Umschalten zwischen den Dosiervorrichtungen bzw. den Saatgutsorten möglich ist. Zudem kann die Reiheneinheit bzw. das Dosiersystem einfach gestaltet werden kann, da für das Umschalten bzw. bei Änderung der Saatgutsorte keine weiteren Hilfsmittel erforderlich sind. Ein Umschalten kann bspw. durch ein Abschalten des Antriebs einer Dosiervorrichtung erfolgen Der gemeinsame Kornabgabebereich kann mit einem definierten Druckniveau oberhalb eines Umgebungsdrucks bspw. in Form eines Überdrucks beaufschlagt werden. Das definierte Druckniveau kann bspw. durch einen separaten Anschluss oder durch eine Verbindung mit den Kammern erzeugt werden. Durch dieses definierte Druckniveau entsteht in der Saatgutdosierleitung ein Luftstrom, durch welchen die Körner nach dem Lösen vom Dosierorgan und nach Abgabe in die Saatgutdosierleitung eine aktive Beschleunigung erfahren. Dadurch kann ein Verspringen der Körner in der Saatgutdosierleitung weitgehend unterbunden bzw. derartig verringert werden kann, dass dies keinen bzw. nur noch einen vernachlässigbar geringen Einfluss auf die Ablagegenauigkeit hat.

Sofern das erfindungsgemäße Dosiersystem zwei Kammern und damit auch zwei Kornabgabebereiche ausbildet, sind entsprechend zwei Saatguteinlasselemente erforderlich. Durch eine entsprechende Ausgestaltung können die zwei Saatguteinlasselemente in eine Saatgutdosierleitung zusammengeführt werden.

Hierzu sieht die Erfindung vor, dass die wenigstens zwei Dosiervorrichtungen und/oder die wenigstens zwei Dosierorgane zueinander beabstandet angeordnet sind und gegebenenfalls nicht unmittelbar auf der Reiheneinheit montiert werden. Die Dosiervorrichtungen weisen jeweils einen Kornabgabebereich mit einer zugeordneten Saatgutdosierleitung bzw. einem zugeordneten Saatguteinlasselement auf, d.h. jedem Kornabgabebereich ist jeweils ein Saatguteinlasselement zugeordnet. Hierbei werden die zwei Saatguteinlasselemente in deren weiteren Verlauf zu einer gemeinsamen Saatgutdosierleitung zusammengeführt. Als Verbindungsstück kann vorzugsweise ein Y-förmig ausgebildetes Element verwendet werden. Es wären durchaus auch andere Verbindungsstücke vorstellbar, wobei diese in deren Ausgestaltung jeweils so konzipiert sind, dass die wenigstens zwei Saatguteinlasselemente zu einer gemeinsamen Saatgutdosierleitung zusammengeführt werden. Die Zusammenführung in eine Saatgutdosierleitung kann auch beabstandet voneinander erfolgen. Auch können die Saatguteinlasselemente unterschiedliche Längen aufweisen. Auch kann die Saatgutdosierleitung derartig konzipiert sein, dass dieses auch ein Saatguteinlasselement bildet und dass wenigstens ein zweites Saatguteinlasselement mit diesem verbunden wird, wodurch nur eine zusätzliche Leitung vorhanden sein muss. Diese Verbindung kann ebenfalls Y-förmig gebildet sein und als Verbindungsstück bezeichnet werden kann. Das vereinzelte körnige Gut kann so dann über eine gemeinsame Saatgutdosierleitung in die von den Bodenbearbeitungswerkzeugen erzeugte Furche im Boden abgelegt werden.

Die Verbindung kann unmittelbar nach den Dosiervorrichtungen oder von diesen beabstandet erfolgen. Sind bspw. die Dosiervorrichtungen von den Reiheneinheiten beabstandet angeordnet, könnte eine Verbindung erst an der Reiheinheit erfolgen. Eine derartige Anordnung hat den Vorteil, dass ein schnelles Umschalten zwischen den Dosiervorrichtungen bzw. den Saatgutsorten möglich ist. Zudem kann die Reiheneinheit bzw. das erfindungsgemäße Dosiersystem einfach gestaltet werden, da für das Umschalten bzw. bei Änderung der Saatgutsorte keine weiteren Hilfsmittel erforderlich sind. Wie beim Ausführungsbeispiel mit einer gemeinsamen Kammer bzw. mit einem gemeinsamen Kornabgabebereich könnte ein schnelles Umschalten durch eine Motorabschaltung des jeweiligen Dosierorganes erfolgen.

Zudem kann wenigstens ein Kornabgabebereich mit einem definierten Druckniveau oberhalb eines Umgebungsdrucks bspw. in Form eines Überdruckgebläses beaufschlagt werden. Vergleichsweise wie beim Ausführungsbeispiel mit einer gemeinsamen Kammer kann das definierte Druckniveau, welches oberhalb des Umgebungsdrucks liegt, durch einen separaten Anschluss oder durch eine Verbindung mit den Kammern erzeugt werden. Durch dieses Druckniveau entsteht in der Saatgutdosierleitung ein Luftstrom, durch welchen die Körner nach dem Lösen vom Dosierorgan und nach Abgabe in die Saatgutdosierleitung eine aktive Beschleunigung erfahren. Zudem kann ein Verspringen der Körner in der Saatgutdosierleitung weitestgehend unterbunden bzw. derartig verringert werden, das dies keinen bzw. nur noch einen vernachlässigbar geringen Einfluss auf die Ablagegenauigkeit hat.

Ebenso wäre es vorstellbar, dass es sich bei den wenigstens zwei Dosiervorrichtungen um Unterdruckdosiervorrichtungen handelt, bei denen das Druckniveau P2 als Unterdruckniveau ausgebildet ist und das Druckniveau P1 größer als das Druckniveau P2 ist. Um die Körner hier ebenfalls in der Saatgutdosierleitung beschleunigen zu können, könnte der gemeinsame Kornabgabebereich oder wenigstens ein Kornabgabebereich bei zwei Kornabgabebereichen über einen separaten Luftanschluss verfügen. Ebenso wäre es vorstellbar, dass der Saatgutdosierleitung bzw. wenigstens einen Saatguteinlasselement eine Druckbeaufschlagungseinrichtung zugeordnet ist. Diese kann bspw. in Form einer Venturi- bzw. Ringdüse erfolgen, mittels derer die Körner in der Saatgutdosierleitung beschleunigt werden können. Vorzugsweise kann der Luftstrom bzw. der Überdruck reguliert werden, wodurch die Geschwindigkeit der Körner in der Saatgutdosierleitung beeinflusst werden kann.

Die Erfindung sieht zudem vor, dass der Luftstrom in der Saatgutdosierleitung variiert werden kann. Hierzu sind diverse Lösungsansätze vorstellbar. Zum einen kann der Kornabgabebereich mit wenigstens einer Kammer wirkverbunden sein, so dass in der Dosiervorrichtung auf der den Körnern zugewandten Seite nahezu das gleiche Druckniveau vorherrscht. Auch wäre es vorstellbar, dass der Kornabgabebereich über einen separaten Druckanschluss mit dem Druckerzeugungsglied oder mit der Luftversorgungsleitung der Kammern in Verbindung ist. Demnach können zwischen der Kammer und dem wenigstens einem Kornabgabebereich bzw. des Kornabgabebereichs unterschiedliche Druckniveaus vorherrschen. Die zusätzliche Verbindung könnte zudem über ein Variationsglied verfügen, wodurch der Luftstrom bzw. der Überdruck in der Saatgutdosierleitung variiert werden kann.

In einer bevorzugten Ausgestaltungsform ist wenigstens ein Kornabgabebereich mit einer Kammer verbunden bzw. der Saatguteinlass ist in der Kammer der Dosiervorrichtung angeordnet, wodurch der Überdruck der Kammer gleichzeitig auch zur Erzeugung des Luftstroms in der Saatgutdosierleitung verwendet wird.

Die Aussparungen in den Dosierorganen sind entlang wenigstens einer Kreis- bzw. Kurvenbahn angeordnet, wobei die Saatgutdosierleitung bzw. das Saatguteinlasselement zumindest abschnittsweise tangential zu wenigstens einer der Kurvenbahnen angeordnet ist. Die Saatgutdosierleitung weist einen Saatguteinlass und einen Saatgutauslass auf, wobei diese einen vorzugsweisen runden Querschnitt aufweisen. Ebenso wären aber auch verschiedene Querschnitte denkbar, bspw. quadratische oder rechteckige. Der Querschnitt der Saatgutdosierleitung kann sich zudem in dessen Verlauf ändern. So kann dieser größer oder kleiner werden. Dadurch kann die Geschwindigkeit der Körner in der Saatgutdosierleitung verändert werden. Ebenso kann die Saatgutdosierleitung in dessen Verlauf unterschiedliche Radien aufweisen, wodurch die Körner entlang der Saatgutdosierleitung geführt werden können, wodurch ein Verspringen der Körner verhindert werden kann. Bei vorliegendem Gegenstand ist die Saatgutdosierleitung zumindest abschnittsweise sichel- und/oder bogenförmig ausgebildet.

Weiter sieht die Erfindung vor, dass bei einer gemeinsamen Kammer bzw. bei einem gemeinsamen Kornabgabebereich die Saatgutdosierleitung bzw. der Saatguteinlass so gestaltet sein kann, dass diese sich im Kornabgabebereich aufweitet und sich in deren Verlauf verjüngt. Dies hat den Vorteil, dass die Körner im Abgabebereich ausreichend Platz zur Verfügung haben, um sicher von der Saatgutdosierleitung aufgenommen werden zu können. In der Mitte der aufgeweiteten Stelle kann bspw. noch ein Zwischenstück angebracht sein, welche die Saatgutdosierleitung unterteilt. Mit diesem kann erreicht werden, dass durch den Luftstrom eine Saugwirkung im Bereich der Kornabgabe entsteht, wodurch jeweils eine reibungslose Kornabgabe gewährleistet wird.

Weiter kann vorgesehen sein, dass der Saatguteinlass derartig zur Scheibe angebracht sein kann, dass die Scheibe diesen hinterschneidet. Im Falle einer gemeinsamen Kammer bzw. eines gemeinsamen Kornabgabebereichs bedeutet dies, dass der Abstand der wenigstens zwei Dosierorgane am Kornabgabebereich zueinander geringer ist, als der Durchmesser bzw. der Querschnitt der Saatgutdosierleitung bzw. des Saatguteinlasses. Bei beiden Ausführungsformen könnte die Saatgutdosierleitung ebenso einen runden Querschnitt aufweisen, welcher aber auf der der Scheibe zugewandten Seite unterbrochen ist. Hierdurch kann die Kornabgabe des Dosierorgans in die Saatgutdosierleitung wesentlich verbessert werden, da evtl. Störkanten, welche ansonsten zwischen Saatgutdosierleitung und Dosierorgan vorhanden sind, entfallen.

Ebenso wäre es im Hinblick auf zwei Kammern bzw. zwei Kornabgabebereiche denkbar, dass das Dosierorgan das Saatguteinlasselement nicht hinterschneidet. Um jedoch bei einer derartigen Anordnung Kanten des Saatguteinlasselements am Dosierorgan zu vermeiden, kann dieses in einem Winkel angebracht sein. Ebenso wäre es vorstellbar, dass Saatguteinlasselement mit einer Fase zu versehen, um somit wiederum die Kantenstärke zu verringern.

Wie bereits erwähnt, können die wenigstens zwei Dosiervorrichtungen und/oder die wenigstens zwei Dosierorgane ein gemeinsames Gehäuse aufweisen bzw. in einem gemeinsamen Gehäuse angeordnet sein. Die beiden Dosierorgane wären somit baulich integriert. Die Kammern der Dosiervorrichtungen sind in diesem Fall durch eine Trennwand untereilt, um ein Vermischen der verschiedenen Saatgutsorten zu verhindern. Die Saatgutsorten werden in einem Saatgutvorrat aufbewahrt und können jederzeit den Kammern zugeführt werden. Die Trennwand ist vorzugsweise so ausgelegt, dass diese luftdurchlässig ist. Hierdurch wird für die wenigstens zwei Dosiervorrichtungen nur eine zentrale Luftversorgung benötigt, so dass der Verschlauchungsaufwand der Maschine verringert werden kann.

Weiter kann der Saatgutgutdosierleitung und/oder wenigstens einem Saatguteinlasselement in deren Verlauf wenigstens ein Sensorelement zugeordnet sein, mittels welchem die Kornabgabe bzw. der Korntransport dieser überwacht wird. Das wenigstens eine Sensorelement ist vorzugsweise als optisch arbeitendes Sensorelement ausgeführt. Die ermittelten Werte des wenigstens einen Sensors bzw. der Sensoren können u. a. dafür verwendet werden, um die Geschwindigkeit der Dosierorgane entsprechend variieren und somit die Ausbringgenauigkeit verbessern zu können. Ebenso wären aber auch verschiedenste andere Anwendungsfälle vorstellbar.

Die wenigstens zwei Dosiervorrichtungen können verschiedenste Ausführungsform umfassen. So wären Dosiervorrichtungen vorstellbar, welche nach dem Überdruck- und/oder Unterdruckprinzip arbeiten oder welche eine Kombination aus einem Überdruck- und Unterdruckprinzip aufweisen. Auch mechanisch arbeitende Dosiervorrichtungen wären denkbar, bei welchen die Kornvereinzelung bspw. mittels sog. "Finger Pick Up" erfolgt. Ebenso wären Fliehkraft basierte Dosiervorrichtungen denkbar bzw. vorstellbar, bei welchem die Beschleunigung der Körner durch die Rotationsgeschwindigkeit des Dosierorgans erfolgen kann.

Die wenigstens zwei Dosiervorrichtungen können nach dem gleichen Prinzip arbeiten und den weitgehend selben Aufbau aufweisen. So können die Dosiervorrichtungen jeweils einen ersten Bereich aufweisen, in welchem mittels einer Druckdifferenz von den Aussparungen im Dosierorgan eine Aufnahme von Körner erfolgt. Weiter weisen die wenigstens zwei Dosiervorrichtungen einen zweiten Bereich auf, in welchem ein Transport der Körner mittels des Dosierorgans zum Kornabgabebereich erfolgt. Hierfür ist eine Rotation des Dosierorgans mittels eines Antriebs erforderlich. Der Antrieb des Dosierorganes kann motorisch, elektrisch, hydraulisch etc. ausgebildet sein. Diesem Bereich ist/sind eine Vereinzelungsvorrichtung und/oder Vereinzelungselemente zugeordnet. Die Vereinzelungsvorrichtung bzw. die Vereinzelungselemente dienen u.a. dazu, überschüssige Körner an den Aussparungen abzustoßen. Dies erfolgt derart, dass jeweils nur noch ein Korn an den Aussparungen vorhanden bleibt. Weiter weisen die wenigstens zwei Dosiervorrichtungen einen dritten Bereich auf, welchem wenigstens ein Unterbrechungselement zur Unterbrechung der Druckdifferenz an den Aussparungen zugeordnet ist. Das wenigstens eine Unterbrechungselement kann bspw. in Form einer Rolle ausgebildet sein. Eine Unterbrechung der Druckdifferenz bewirkt zudem, dass die in den Aussparungen befindlichen Körner mittels des Saatguteinlasselements in die Saatgutdosierleitung fallen. Alternativ könnte auch ein Luftstoß die Körner aus den Aussparungen stoßen. Ein vierter Bereich zeichnet sich dadurch aus, dass die Körner und/oder die Luftströmung eine Richtungsänderung aus einer Kreisbewegung und einer senkrechten Luftströmung in eine geführte Transportrichtung und eine geführte Luftströmung in Richtung der Saatgutdosierleitung gelenkt werden. Weiter ist ein fünfter Bereich vorhanden, welchem ein Saatguteinlass der Saatgutdosierleitung und ein Abschnitt der Saatgutdosierleitung zum Transport der Körner zu einer Saatfurche zugeordnet ist.

Die wenigstens zwei dritten, vierten und fünften Bereiche bei einer gemeinsamen Kammer bzw. der dritte, vierte und fünfte Bereich bei zwei Kammern können dabei den gemeinsamen Kornabgabebereich bilden. Die Bereiche schließen hierbei bspw. einen Bereich ein, der wenigstens 75° beträgt. Es wären aber auch größere bzw. kleinere Winkel vorstellbar.

Die wenigstens zwei Dosiervorrichtungen können spiegelbildlich und/oder um die eigene Achse gedreht, vorzugsweise die Achse der Saatgutdosierleitung und/oder parallel zueinander versetzt und/oder in einem Winkel und/oder in einer Kombination daraus, zueinander angeordnet werden. Vorzugsweise werden die Seiten mit den Kammern zueinander gerichtet.

Die Erfindung sieht vor, dass zumindest einer der wenigstens zwei Dosiervorrichtungen bzw. wenigstens einem Dosierorgan ein motorischer Antrieb zugeordnet ist. Somit kann wenigstens eine der wenigstens zwei Dosiervorrichtungen bzw. wenigstens ein Dosierorgan mit einem motorischen Antrieb angetrieben werden. Denkbar wären auch elektrisch oder hydraulisch oder mechanisch arbeitende Antriebe. Weiter können Übertragungseinrichtungen vorgesehen sein, um die Bewegung der wenigstens einen angetriebenen Dosiervorrichtung auf die zweite Dosiervorrichtung übertragen zu können. Als Übertragungseinrichtungen können vorzugsweise Kupplungen oder Riemen oder Getriebe oder Zahnräder Verwendung finden. Ebenso wäre es auch vorstellbar, dass den wenigstens zwei Dosiervorrichtungen jeweils ein separater Antrieb zugeordnet ist, d.h. jede Dosiervorrichtung kann mittels eines separaten Antriebs angetrieben werden. Dies hätte den Vorteil, dass die Dosiervorrichtungen in Abhängigkeit der Saatgutsorte mit unterschiedlichen Geschwindigkeiten betrieben werden können. Zusätzliche Hilfsmittel, wie Übersetzungsgetriebe oder dergleichen, sind bei dieser Form nicht erforderlich.

Zur Ausbildung einer energiearmen Reiheneinheit bzw. eines energiearmes Dosiersystem müssten die Antriebsmotoren der Dosierorgane derartig gekoppelt werden, dass die Bremsenergie des einen ersten Antriebes als Anlaufenergie des zweiten Antriebes und umgekehrt verwendet wird. Ebenso könnte auch die Bewegung einer Dosiervorrichtung als Energieerzeuger für die andere Dosiervorrichtung Verwendung finden.

Die wenigstens zwei Dosiervorrichtungen sind derartig gekoppelt, dass jeweils mittels wenigstens einer Dosiervorrichtung eine vereinzelte Kornabgabe in das Saatguteinlasselement bzw. in die Saatgutdosierleitung erfolgt. Die Geschwindigkeiten der wenigstens zwei Dosierorgane sind derartig abgestimmt, dass bei einem Wechsel der Kornabgabe von einem Dosierorgan auf das andere, die Kornabgaben synchronisiert werden, d.h. dass der gewünschte Sollabstand der Körner auch bei einem Wechsel eingehalten wird. Um dies zu verbessern, können die wenigstens zwei Dosiervorrichtungen bzw. die Aussparungen der wenigstens zwei Dosierorgane bis unmittelbar vor das Unterbrechungselement bzw. bis zum Kornabgabebereich mit Körnern besetzt sein. Es erfolgt aber jeweils nur bei einer Dosiervorrichtung eine Kornabgabe bzw. eine Unterbrechung der Druckdifferenz, d.h. das Unterbrechungselement stößt jeweils nur bei einem Dosierorgan die Körner aus den Aussparungen. Ebenso können bei einer gleichzeitigen Kornabgabe der wenigstens zwei Dosierorgane diese derartig synchronisiert sein, dass die Körner jeweils abwechselnd in das Saatguteinlasselement abgegeben werden. Somit müssten bei einer gleichzeitigen Kornabgabe auch die Unterbrechungselemente der beiden Kammern aufeinander abgestimmt werden, d.h. die Unterbrechungselemente müssten jeweils abwechselnd für eine Unterbrechung der Druckdifferenz sorgen. Dies lässt sich bspw. mittels einer entsprechenden Sensoranordnung in Verbindung mit einer Steuervorrichtung erreichen.

Die gewünschte Umschaltung zwischen den Saatgutsorten bzw. den wenigstens zwei Dosiervorrichtungen erfolgt vorzugsweise mittels GPS-Daten oder mittels eines anderen Satellitensystems oder Positionserkennungssystems. Auch können die Umschaltpunkte in einer Rechnereinheit hinterlegt sein und somit eine Umschaltung erfolgen. Ebenso wäre eine manuelle Umschaltung durch eine Bedienperson vorstellbar. Die Umschaltung zwischen den wenigstens zwei Dosiervorrichtungen ist dahingehend erforderlich, dass zwischen verschiedenen Saatgutsorten gewechselt werden kann.

Um eine eventuelle Kollision der Körner nach einem Wechsel der Kornabgabe von einer Dosiervorrichtung auf die andere zu vermeiden, können sich die Dosierorgane der wenigstens zwei Dosiervorrichtungen zumindest abschnittsweise entgegengesetzt bewegen. Das bedeutet, dass dasjenige Dosierorgan, mittels dem eine Kornabgabe erfolgen soll, sich bspw. im Uhrzeigersinn bewegt. Während das andere Dosierorgan, bei welchem keine Kornabgabe mehr erfolgen soll, sich zumindest kurzzeitig im Gegenuhrzeigersinn bewegt. Hierdurch kann eine Kollision von Körnern vermieden werden. Anschließend könnte jeweils ein Dosierorgan vollständig über eine Motorabschaltung deaktiviert werden. Aufgrund des Zusammenspiels der beiden Dosierorgane können unterschiedliche Saatgutsorten während einer Feldfahrt ausgebracht werden.

Die wenigstens zwei Dosiervorrichtungen könnten darüber hinaus so gestaltet sein, dass die Seiten mit dem jeweils geringeren vorherrschenden Druckniveau jeweils mit den Kammern der anderen Dosiervorrichtung und/oder mit der Luftversorgung verbunden sind. Ebenso könnten die Bereiche mit geringerem Druckniveau wiederum mit einem Ansaugbereich des Druckerzeugungsgliedes verbunden sein. Weiter könnten den Seiten der wenigstens zwei Dosierorgane mit geringerem Druckniveau, also der den Körnern abgewandten Seite der wenigstens zwei Dosierorgane, Mittel derartig zugeordnet sein, um Aussparungen, in Bereichen in welchen keine Körner gefördert werden abdecken zu können bzw. um die Druckdifferenz in diesen Bereichen unterbinden oder verringern zu können. Diese Bereiche könnten sich bspw. zwischen der Kornabgabe und der Kornaufnahme befinden. Aber auch andere Teile könnten bedeckt sein, bspw. dann, wenn keine Körner gefördert bzw. vereinzelt werden sollen.

Die Versorgung der wenigstens zwei Dosiervorrichtungen mit Saatgut kann bspw. mittels eines pneumatischen Fördersystems erfolgen. Auch kann jeder Dosiervorrichtung ein zusätzlicher Behälter zur Aufnahme und Bevorratung der Körner zugeordnet sein. Ebenso wäre es denkbar, dass wenigstens eine Dosiervorrichtung mit einem pneumatischen Fördersystem und die zweite Dosiervorrichtung mit einem zusätzlichen Behälter versorgt werden. Dies wäre dann vorteilhaft, wenn bspw. von einer Saatgutsorte wesentlich mehr als von der anderen benötigt werden würde, so dass das Saatgut mit viel Verbrauch mit einem pneumatischen Fördersystem versorgt wird, welches Saatgut durch einen großen, an der Maschine angebrachten Tank bereitgestellt wird. Ebenso könnte die Ansteuerung der wenigstens zwei Dosiervorrichtungen derartig erfolgen, dass bei einer Unterbrechung der Saatgutversorgung für die erste Dosiervorrichtung eine automatisierte Ansteuerung der einen zweiten Dosiervorrichtung erfolgt. Die Versorgungsluft des pneumatischen Fördersystems könnte zudem auch zur Unterstützung des definierten Druckniveaus in der Kammer verwendet werden.

Die Reiheneinheit weist neben dem zugeordneten Dosiersystem furchenbildende Werkzeuge auf, vorzugsweise zwei in einem Winkel zueinander angeordnete Sechscheiben auf. Diese bilden ein sog. Doppelscheibenschar. Es wäre jedoch auch vorstellbar, die vorliegende Erfindung bei einem sog. Einscheibenschar oder bei einem Zinkenschar zu verwenden. Die Saatgutdosierleitung ist bspw. zwischen den beiden bzw. neben der einen Scheibe angebracht, wobei wiederum der Saatgutauslass innerhalb oder unmittelbar angrenzend an wenigstens eine Außenkontur der wenigstens einen Scheibe angeordnet ist. Weiter ist den Sechscheiben bzw. den Zinken ein Fangelement nachgeordnet bzw. zwischen diese hineinragend und/oder neben dieser angeordnet und bspw. in Form einer Rolle ausgebildet. Dieses ist so angebracht, dass der Körnerstrom und/oder der Luftstrom am Saatgutauslass im Wesentlichen tangential zur Außenkontur des Fangelementes gerichtet ist/sind.

Im Kornabgabebereich erfolgt eine Richtungsänderung der Körner, d.h. die Körner werden aus einer Kreisbewegung entlang der Kurvenbahn in eine weitgehend tangentiale und/oder lineare Richtung zur Kurvenbahn geleitet. Dies erfolgt mittels einer Richtungsänderung der Luftströmungen, welche in den Kammern jeweils als senkrechte Luftströmung zu den Aussparungen gerichtet ist, in eine geführte Luftströmung. Diese Luftströmung ist entlang der Saatgutdosierleitung und/oder dem wenigstens einen Kornabgabebereich zugeordneten Führungselement gerichtet. Das Führungselement weist zudem eine Führungsbahn auf, welche zumindest abschnittsweise die gleiche Richtung wie das wenigstens eine Saatguteinlasselement aufweist. Dadurch kann eine geführte Luftströmung erzeugt werden, wobei die Luftströmung wiederum bspw. durch eine Wirkverbindung mit wenigstens einer Kammer erzeugt werden kann. Ebenso wäre jedoch auch eine separate Luftversorgung vorstellbar.

Die Kurvenbahn, das Führungselement und die Saatgutdosierleitung sind darüber hinaus derartig angeordnet, dass jegliche Elemente, wie Körner, Schmutzpartikel oder dergleichen, welche den Kornabgabebereich erreichen, zwangsgeführt über die Führungsbahn in die Saatgutdosierleitung abgegeben werden. Hierdurch kann die Verschmutzungsanfälligkeit wesentlich verbessert werden. Um die Verschmutzungsanfälligkeit noch weiter zu verbessern, kann den wenigstens zwei Dosierorganen bzw. Kornabgabebereichen jeweils noch auf der den Körnern abgewandten Seite eine Ausdrückrolle oder Ausdrückelemente zugeordnet sein. Mittels dieser können ggf. sich nach der Kornabgabe noch an den Aussparungen befindliche Körner und/oder Schmutzpartikel von den Aussparungen entfernt und in die Saatgutdosierleitung mit abgegeben werden.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Seitenansicht einer Reiheneinheit einer landwirtschaftlichen Maschine gemäß eines ersten Ausführungsbeispiels.
Fig. 2 zeigt eine Perspektivansicht einer Ausgestaltungsform eines erfindungsgemäßen Dosiersystems.
Fig. 3 zeigt eine Seitenansicht im Schnitt einer Ausgestaltungsform eines Dosiersystems entsprechend der Figur 2.
Fig. 4 zeigt eine Draufsicht im Schnitt des Dosiersystems entsprechend der Figur 2.
Fig. 5 zeigt eine Vorderansicht im Schnitt des Dosiersystems entsprechend der Figur 2.
Fig. 6 zeigt in einer vereinfachten Perspektivansicht und einer vereinfachten Draufsicht eine winkelige Anordnung der Dosierorgane zueinander.
Fig. 7 zeigt eine schematische Seitenansicht einer Reiheneinheit der landwirtschaftlichen Maschine gemäß einem zweiten Ausführungsbeispiel.
Fig. 8 zeigt eine Seitenansicht einer Ausführungsform des erfindungsgemäßen Dosiersystems nach Figur 7.
Fig. 9 zeigt eine Vorderansicht des Dosiersystems gemäß Fig. 7 im Schnitt.
Fig. 10 zeigt eine Vorderansicht des Dosiersystems nach Figur 7 im Schnitt, bei der die Dosierorgane die Saatguteinlasselemente hinterschneiden.

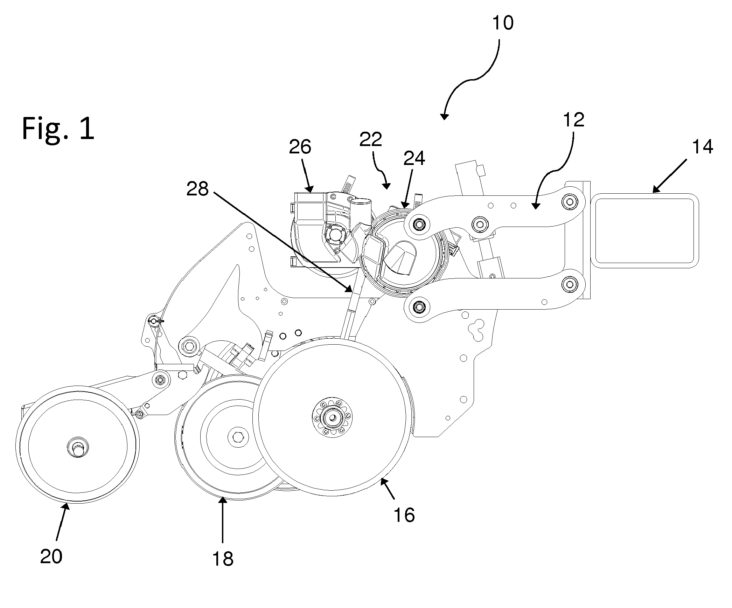

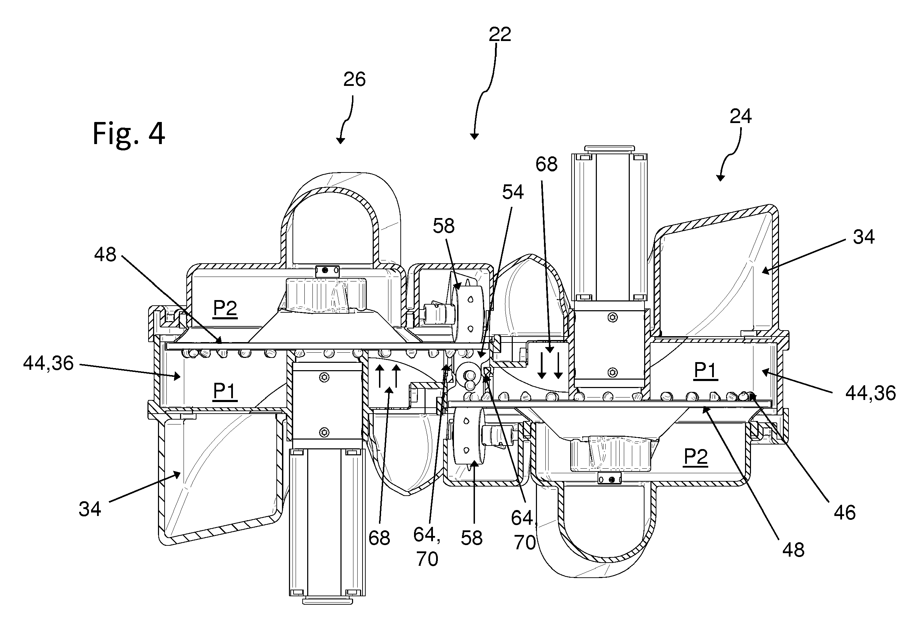

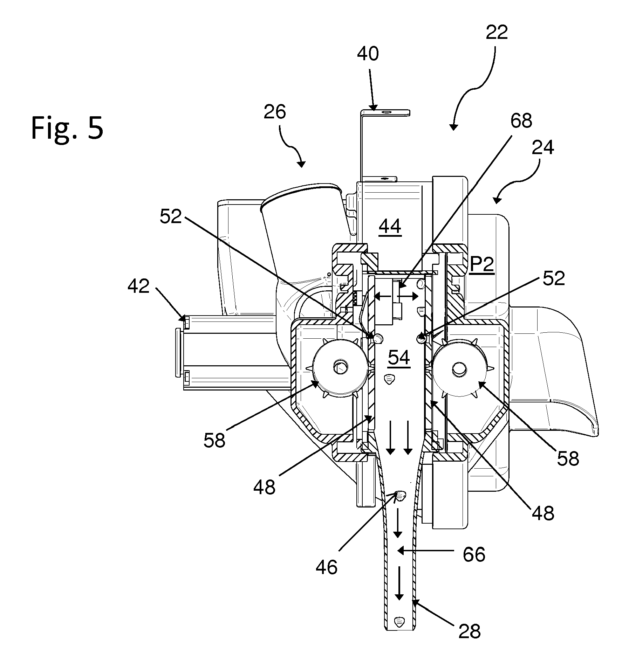

Für gleiche oder gleich wirkende Elemente der Erfindung werden in den Figuren 1 bis 10 identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie das erfindungsgemäße Dosiersystem ausgestaltet sein kann und stellen keine abschließende Begrenzung dar.

Figur 1 zeigt eine Seitenansicht einer Reiheneinheit 10 einer landwirtschaftlichen Maschine in Form einer Einzelkornmaschine. Derartige Maschinen finden in der Landwirtschaft zur vereinzelten Abgabe von granulatartigen Körner wie Saatgut und/oder Dünger Verwendung. Die Reiheneinheit 10 ist über eine Stützvorrichtung 12 in Form eines Parallelogramms mit einem Rahmen 14 der Maschine verbunden. Die Reiheneinheit 10 weist zudem furchenbildende Werkzeuge auf, welche insbesondere zwei in einem Winkel zueinander angeordnete Sechscheiben 16 ausbilden. Den Sechscheiben 16 nachgeordnet bzw. zwischen diese hineinragend angeordnet, ist ein Fangelement 18. Dieses ist als Rolle ausgebildet, welche die auszubringenden Körner nach deren Abgabe in der Furche fangen bzw. abbremsen soll. Am hinteren Ende der Reiheneinheit 10 sind als furchenschließende Werkzeuge zwei Rollen 20 angeordnet.

Der Reiheneinheit 10 ist im Ausführungsbeispiel ein Dosiersystem 22 zugeordnet, welches zwei Dosiervorrichtungen 24, 26 umfasst. Das Dosiersystem 22 ist im gezeigten Beispiel Teil der Reiheneinheit 10. Es wäre jedoch auch denkbar, dass dieses von der Reiheneinheit 10 beabstandet und bspw. am Rahmen der Maschine angeordnet ist. Am unteren Ende des Dosiersystems 22 ist eine Saatgutdosierleitung 28 angebracht, mittels derer die von den Dosiervorrichtungen 24, 26 vereinzelten Körner in die Saatfurche transportiert werden. Der in die Dosieraggregate hineinragende Abschnitt der Saatgutdosierleitung 28 kann auch als Saatguteinlasselement 27 bezeichnet werden.

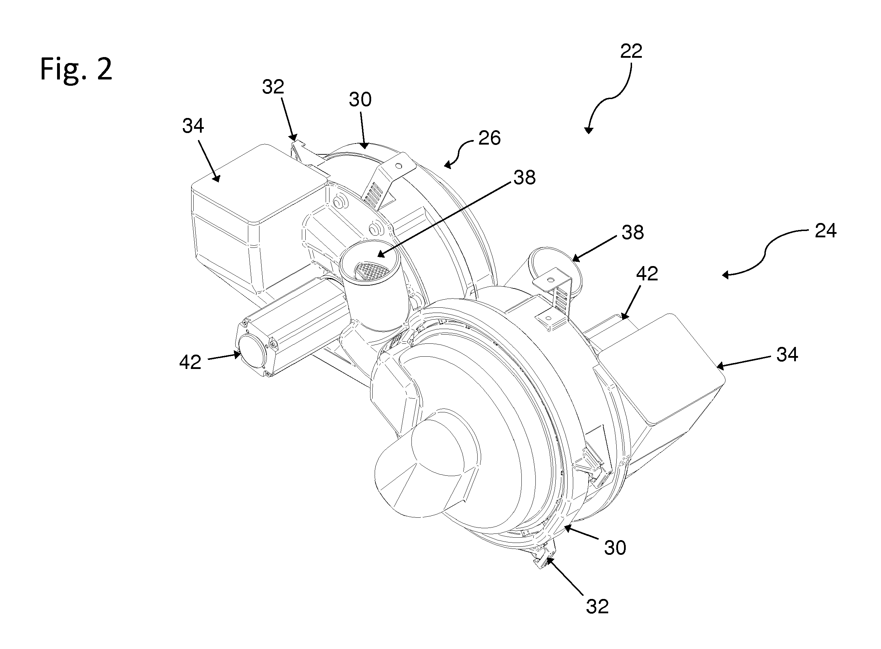

Das erfindungsgemäße Dosiersystem 22 ist in Figur 2 in einer Perspektivansicht dargestellt. Das Dosiersystem 22 setzt sich aus einer vorderen und einer hinteren Dosiervorrichtung 24; 26 zusammen. Im hier dargestellten Ausführungsbeispiel der Figur 2 weisen die zwei Dosiervorrichtungen 24, 26 identische Bauweisen auf. Die Dosiervorrichtung 24, 26 sind jedoch um eine eigene Achse gedreht zueinander angeordnet. Die Dosiervorrichtungen 24; 26 besitzen jeweils ein mehrteiliges Gehäuse 30, welches sich bspw. aus einer vorderen und einer hinteren Gehäusehälfte zusammensetzt. Die Gehäusehälften werden mittels Scharnieren 32 und/oder Verschlusselementen verbunden. Das Gehäuse 30 weist jeweils einen Lufteinlass 38 auf, mittels dessen die Dosiervorrichtungen 24, 26 mit dem entsprechenden Druckniveau versorgt werden. Die Dosiervorrichtungen 24, 26 werden über eine Kornzuführung 34 bzw. einem hier nicht dargestellten Saatgutvorrat 36 mit dem jeweils auszubringenden Material in Form von Körnern versorgt. Vorzugsweise handelt es sich bei dem Saatgut um unterschiedliche Materialien. Die Versorgung der Dosiervorrichtungen 24, 26 kann bspw. mittels eines an der Reiheneinheit angebrachten Behälters oder mittels eines pneumatischen Fördersystems erfolgen. Um die geförderte Saatgutmenge variieren zu können, sind den Dosiervorrichtungen 24, 26 zusätzliche Schieber 40 zugeordnet. Der Schieber 40 dient zur entsprechenden schrittweisen Öffnung oder Schließung des Saatgutvorrats 36. Jede Dosiervorrichtung 24, 26 wird mit einem Antriebsmotor 42 angetrieben. Als Antriebsmotoren können elektrische oder hydraulische Varianten eingesetzt werden.

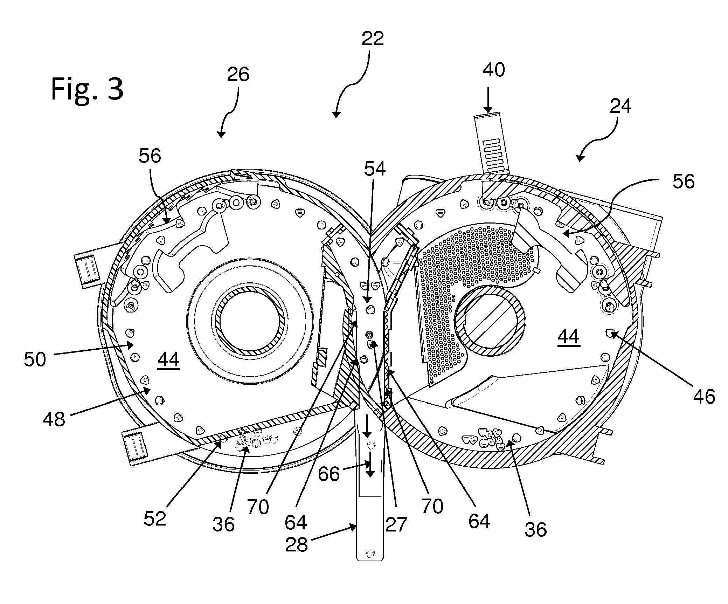

Die Figuren 3, 4 und 5 zeigen jeweils in verschiedenen Ansichten die Kombination der zwei Dosiervorrichtungen 24, 26 gemäß der Figur 2. Hierzu sind zum besseren Verständnis, Teile des Gehäuses 30 oder für die Beschreibung nicht benötigte Teile entsprechend ausgeblendet bzw. im Schnitt dargestellt.

Das Dosiersystem 22 setzt sich aus zwei Dosiervorrichtungen 24, 26 zusammen. Diese sind jeweils Baugleich ausgeführt, aber um die eigene Achse gedreht zueinander angeordnet. Die Dosiervorrichtungen 24, 26 weisen jeweils eine oder eine gemeinsame Kammer 44 auf, die jeweils mit auszubringenden Saatgut bzw. den entsprechenden Körnern 46 versorgt wird. Bei einer Ausgestaltungsform mit einer gemeinsamen Kammer 44 werden diese mittels eines Trennelement unterteilt. Dadurch wird erreicht, dass die verschiedenen Saatgutsorten nicht vermischt werden. Als Trennelement finden vorzugsweise luftdurchlässige Elemente Verwendung.

Die Kammern 44 bzw. die gemeinsame Kammer 44 wird jeweils mit einem Druckniveau P1 beaufschlagt, welches von einem bspw. an der Maschine angebrachten Druckerzeugungsglied erzeugt wird. Hierzu können bspw. Überdruckgebläse eingesetzt werden.

In den Dosiervorrichtungen 24, 26 rotiert jeweils ein Dosierorgan 48, welche im vorliegenden Ausführungsbeispiel jeweils als Scheibe ausgebildet ist. Im Dosierorgan 48 sind jeweils entlang wenigstens einer Kurvenbahn 50 in regelmäßigen Abständen Aussparungen 52 angebracht. Die Aussparungen 52 sind hier vorliegend als Bohrungen ausgeführt. Ebenso könnten die Aussparungen 42 auch als Langlöcher und/oder Schlitze oder dergleichen ausgeführt sein. Die Aussparungen 52 können in den Dosiervorrichtungen 24, 26 darüber hinaus unterschiedliche Größen und Konturen aufweisen, welche jeweils auf die auszubringenden Korngrößen angepasst sind bzw. entsprechend ausgewählt werden können. Das Dosierorgan 48 begrenzt jeweils die Kammer 44, wobei mittels der Aussparungen 52 eine Verbindung mit einem Bereich mit einem geringeren vorherrschenden Druckniveau P2 entsteht. Dadurch entsteht an den Aussparungen 52 jeweils eine Druckdifferenz. Aufgrund dessen können jeweils Körner 46 aufgenommen werden. Durch Rotation des Dosierorgans 48 werden die von den Aussparungen 52 aufgenommenen Körner zu einem Kornabgabebereich 54 gefördert.

Zwischen dem Saatgutvorrat 36 und dem Kornabgabebereich 54 ist eine Vereinzelungsvorrichtung bzw. sind Vereinzelungselemente 56 angebracht. Diese entsprechen, wie bereits genannt, dem Gegenstand der EP 1 928 223 B1. Ebenso wären jedoch auch diverse andere Vereinzelungselemente 56 einsetzbar. Mittels dieser Vereinzelungsvorrichtungen 56 können überschüssige und gegebenenfalls an den Aussparungen 52 anhaftende Körner 46 abgestoßen werden, so dass nur noch jeweils ein Korn an den Aussparungen 52 vorhanden bleibt.

Die Dosiervorrichtungen 22 weisen einen gemeinsamen Kornabgabebereich 54 auf, d.h. es werden jeweils mittels der Dosiervorrichtungen 24; 26 unterschiedliche Saatgutsorten vereinzelt. Durch Rotation der Dosierorgane 48 werden die von den Aussparungen festgehaltenen Körner zum gemeinsamen Kornabgabebereich 54 transportiert. Anschließend können die Körner durch Unterbrechung der Druckdifferenz mittels Unterbrechungselementen 58 in eine dem Kornabgabebereich 54 zugeordnete Saatgutdosierleitung 28 mittels eines Saatguteinlasselements 27 abgegeben werden. Die Unterbrechungselemente 58 können bspw. als Rolle ausgebildet sein. Das Saatguteinlasselement 27 definiert einen Abschnitt der Saatgutdosierleitung 28, welche in den gemeinsamen Kornabgabebereich 54 mündet.

Wie die Kammern 44 kann auch der Kornabgabebereich 54 mit einem Druckniveau beaufschlagt werden. Im vorliegenden Ausführungsbeispiel erfolgt dies durch eine Wirkverbindung zwischen den Kammern 44 und dem Kornabgabebereich 54, d.h. es wird keine zusätzliche Luftversorgung benötigt und es herrscht in den Kammern 44 und im Kornabgabebereich 54 jeweils das weitgehend gleiche Druckniveau.

Durch den im Kornabgabebereich 54 vorherrschenden Luftdruck entsteht aufgrund des geringeren vorherrschenden Drucks in der Saatgutdosierleitung 28 ein Luftstrom. Nach dem Lösen der Körner 46 vom Dosierorgan 48 werden diese von dem Luftstrom aufgenommen, wodurch die Körner 46 mittels eines Saatguteinlasselements 27 in der Saatgutdosierleitung 28 eine aktive Beschleunigung erfahren. Dadurch kann ein Verspringen der Körner 46 in der Saatgutdosierleitung 28 weitgehend unterbunden bzw. derartig verringert werden kann, dass dies keinen bzw. nur noch einen vernachlässigbar geringen Einfluss auf die Ablagegenauigkeit hat.

Die Saatgutdosierleitung 28 bzw. der Saatguteinlass 60 ist so gestaltet, dass dieses sich im Kornabgabebereich 54 aufweitet und sich in dessen Verlauf verjüngt. Dies hat den Vorteil, dass die Körner 46 im Kornabgabebereich 54 ausreichend Platz zur Verfügung haben, um sicher von der Saatgutdosierleitung 28 aufgenommen zu werden.

Im Kornabgabebereich 54 erfolgt eine Richtungsänderung der Körner 44 aus einer Kreisbewegung entlang der Kurvenbahn 50 in eine weitgehend tangentiale und/oder lineare Richtung zur Kurvenbahn 50. Dies geschieht mittels einer Richtungsänderung der Luftströmungen, welche in den Kammern 44 jeweils als senkrechte Luftströmung 68 zu den Aussparungen 52 gerichtet ist, in eine geführte Luftströmung 66, welche entlang der Saatgutdosierleitung 28 und/oder dem Kornabgabebereich 54 zugeordneten Führungselement 64 gerichtet ist. Das Führungselement 64 weist zudem eine Führungsbahn 70 auf, welche zumindest abschnittsweise die gleiche Richtung wie die Saatgutdosierleitung 28 aufweist. Dadurch kann eine geführte Luftströmung 66 erzeugt werden. Die Luftströmung wird wiederum durch eine Wirkverbindung mit wenigstens einer Kammer 44 erzeugt. Ebenso wäre jedoch auch eine separate Luftversorgung vorstellbar.

Die Kurvenbahn 50, das Führungselement 64 und die Saatgutdosierleitung 28 sind darüber hinaus derartig angeordnet, dass jegliche Elemente, wie Körner 44, Schmutzpartikel oder dergleichen, welche den Kornabgabebereich 54 erreichen, zwangsgeführt über die Führungsbahn in die Saatgutdosierleitung 28 abgegeben werden. Dadurch kann die Verschmutzungsanfälligkeit wesentlich verbessert werden. Um dies noch weiter zu optimieren, ist den Dosierorganen 48 bzw. den Kornabgabebereichen 54 jeweils auf der den Körnern 46 abgewandten Seite eine Ausdrückrolle 58 zugeordnet. Dadurch werden gegebenenfalls sich nach der Kornabgabe noch an den Aussparungen befindliche Körner 46 und/oder Schmutzpartikel von den Aussparungen 52 entfernt und mittels des Saatguteinlasselements 27 in die Saatgutdosierleitung 28 mit abgegeben.

Zudem erfolgt im Ausführungsbeispiel der Figuren 3 bis 5 jeweils eine vereinzelte Kornabgabe nur mittels einer Dosiervorrichtung 24, 26. Die andere Dosiervorrichtung 24, 26 ist jedoch bis unmittelbar zum Kornabgabebereich 54 bzw. bis unmittelbar vor dem Unterbrechungselement mit Körnern 44 bestückt. Dadurch kann eine schnelle Umschaltung zwischen den Dosiervorrichtungen 24, 26 gewährleistet werden, so dass die Dosiervorrichtungen 24, 26 keine Vorlaufzeit bis zur Kornabgabe benötigen.

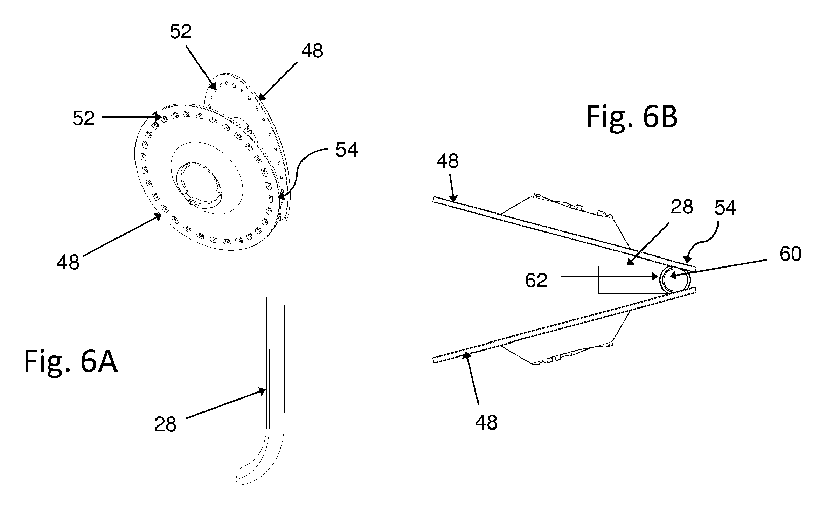

In den Figuren 1 bis 5 die Dosiervorrichtungen 24, 26 waren die Dosiervorrichtungen 24, 26 jeweils um die eigene Achse gedreht und parallel zueinander versetzt angeordnet. In den Figuren 6A und 6B werden in einer Perspektivansicht und einer Draufsicht eine weitere Anordnungsmöglichkeit der Dosiervorrichtungen 24; 26 bzw. der Dosierorgane 48 deutlich.

Die Dosierorgane 48 sind jeweils in einem Winkel zueinander angeordnet. An der rechten unteren Seite mündet eine Saatgutdosierleitung 28, welche einen Saatguteinlass 60 aufweist. Zudem ist der obere Abschnitt der Saatgutdosierleitung 28 als Saatguteinlasselement 27 definiert. Die Dosierorgane 48 hinterschneiden jeweils den Saatguteinlass 60 bzw. die Saatgutdosierleitung 28. Das bedeutet, dass die Dosierorgane 48 am Kornabgabebereich 54 jeweils näher zueinander angebracht sind als der Durchmesser der Saatgutdosierleitung 28 ausgeführt ist. Dies hat zur Folge, dass jeweils die bogenförmige Kontur 62 dieser an der den Dosierorganen 48 zugewandten Seite unterbrochen ist. Dies hat den Vorteil, dass keine Kanten der Saatgutdosierleitung 28 am Dosierorgan 48 anstehen. Eine Verbesserung der Kornabgabe kann dadurch erreicht werden.

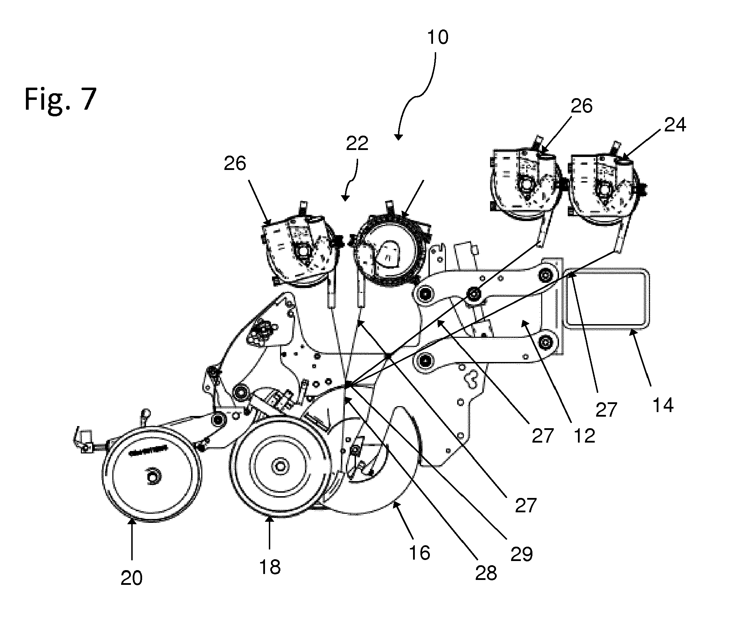

Die Figur 7 zeigt ebenso eine Seitenansicht einer Ausführungsform einer Reiheneinheit 10 gemäß eines zweiten Ausführungsbeispiels. Das Ausführungsbeispiel umfasst ebenfalls Dosiersysteme 22. Während eine der beiden Dosiersysteme unmittelbar Bestandteil der Reiheneinheit 10 ist, ist die andere ist andeutungsweise am Rahmen 14 montiert. Beiden Dosiervorrichtungen 24, 26 ist jeweils ein Saatguteinlasselement 27 zugeordnet. Die zwei Saatguteinlasselemente 27 können mittels eines Verbindungsstückes 29 zu einer Saatgutdosierleitung 28 zusammengeführt werden. Das Verbindungsstück 29 ist Y-förmig ausgebildet. Es wären jedoch auch diverse andere Verbindungsstücke bzw. Verbindungsmöglichkeiten vorstellbar. Die Verbindungsstücke sind aber jeweils so konzipiert, dass die wenigstens zwei Saatguteinlasselemente 27 zu einer gemeinsamen Saatgutdosierleitung 28 zusammengeführt werden. Die Zusammenführung der Saatguteinlasselemente 27 erfolgt jeweils an der Reiheneinheit 10, wobei hierzu jedoch auch andere Positionen, insbesondere unmittelbar nach den Dosiervorrichtungen 24, 26 vorstellbar bzw. denkbar wären. Eine derartige Zusammenführung hätte den Vorteil, dass zu den Reiheneinheiten 10 jeweils nur eine Saatgutdosierleitung 28 und nicht zwei Saatguteinlasselemente 27 gelegt werden müssten.

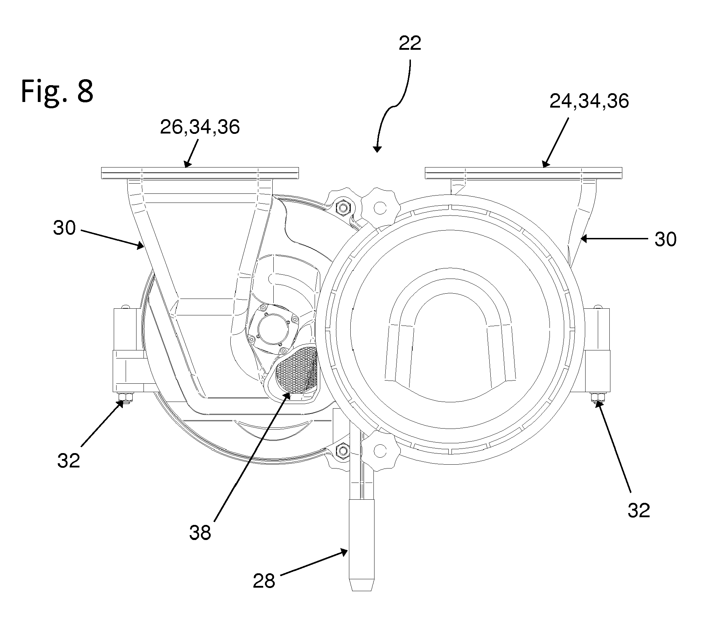

Das Dosiersystem 22 ist in Figur 8 in einer Seitenansicht dargestellt. Das Dosiersystem 22 setzt sich aus einer vorderen und einer hinteren Dosiervorrichtung 24, 26 zusammen. Im vorliegenden Ausführungsbeispiel der Figur 8 weisen die beiden Dosiervorrichtungen 24, 26 identische Bauweisen auf. Sie sind jedoch um deren Achse gedreht zueinander angeordnet. Die Dosiervorrichtungen 24, 26 besitzen jeweils ein mehrteiliges Gehäuse 30, welches sich bspw. aus einer vorderen und einer hinteren Gehäusehälfte zusammensetzt. Die Gehäusehälften werden mittels Scharnieren 32 und/oder Verschlusselementen verbunden. Das Gehäuse 30 weist jeweils einen Lufteinlass 38 auf, so dass die Dosiervorrichtungen 24, 26 mit dem entsprechenden Druckniveau versorgt werden. Die Dosiervorrichtungen 24, 26 werden jeweils über eine Kornzuführung 34 bzw. einen hier nicht dargestellten Saatgutvorrat 36 mit dem jeweils auszubringenden Material in Form von Körnern, versorgt. Vorzugsweise handelt es sich hier um unterschiedliche Materialien. Die Versorgung der Dosiervorrichtungen 24, 26 kann bspw. mittels eines an der Reiheneinheit angebrachten Behälters oder mittels eines pneumatischen Fördersystems erfolgen. Um die geförderte Saatgutmenge variieren zu können, sind den Dosiervorrichtungen 24, 26 zusätzliche Schieber 40 zugeordnet. Die Schieber 40 dienen dazu, die Öffnung des Saatgutvorrats 36 entsprechend schrittweise öffnen oder schließen zu können. Jede Dosiervorrichtung 24, 26 wird mit einem Antriebsmotor 42 angetrieben. Der Antriebe kann mechanisch, elektrisch oder hydraulisch etc. ausgebildet sein.

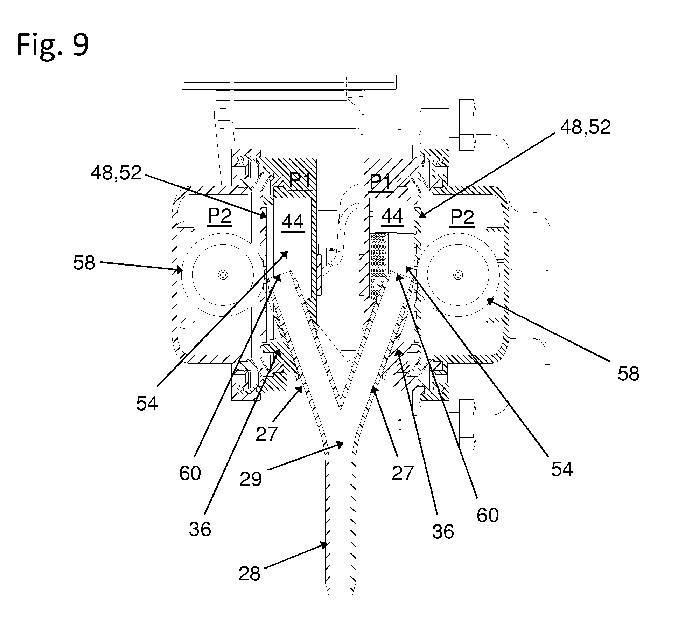

Die Figur 9 zeigt in einer vorderen Schnittansicht die Anordnung der zwei Dosiervorrichtungen 24, 26. Hierzu sind zum besseren Verständnis Teile des Gehäuses 30 oder für die Beschreibung nicht benötigte Teile entsprechend ausgeblendet bzw. im Schnitt dargestellt.

Das Dosiersystem 22 setzt sich jeweils aus zwei Dosiervorrichtungen 24, 26 zusammen. Im vorliegenden Ausführungsbeispiel sind die zwei Dosiervorrichtungen 24, 26 jeweils weitgehend Baugleich ausgeführt. Zudem sind die zwei Dosiervorrichtungen 24, 26, um deren Achse bzw. um die Achse der Saatgutdosierleitung 28 gedreht zueinander angeordnet. Die Dosiervorrichtungen 24, 26 weisen jeweils eine Kammer 44 auf. Die Kammer 44 kann mit dem jeweils auszubringenden Saatgut bzw. den entsprechenden Körnern 46 versorgt werden.

Die Kammern 44 werden jeweils mit einem Druckniveau P1 beaufschlagt, welcher von einem bspw. an der Maschine angebrachten Druckerzeugungsglied in Form eines Über- oder Unterdruckgebläses erzeugt wird.

In den Dosiervorrichtungen 24, 26 rotiert jeweils ein Dosierorgan 48, welches im vorliegenden Ausführungsbeispiel als Scheibe gebildet ist. Das Dosierorgan 48 umfasst jeweils entlang wenigstens einer Kurvenbahn 50 in regelmäßigen Abständen Aussparungen 52. Diese Aussparungen 52 sind als Bohrungen ausgeführt. Ebenso könnten die Aussparungen auch als Langlöcher und/oder Schlitze oder dergleichen ausgeführt sein. Die Aussparungen 52 können in den Dosiervorrichtungen 24, 26 darüber hinaus unterschiedliche Größen und Konturen aufweisen, welche jeweils auf die auszubringenden Korngrößen angepasst sind bzw. entsprechend ausgewählt werden können. Das Dosierorgan 48 begrenzt jeweils die Kammer 44. Mittels der Aussparungen 52 entsteht jeweils eine Verbindung mit einem Bereich, mit einem geringeren vorherrschenden Druckniveau P2. Dadurch entsteht an den Aussparungen 52 jeweils eine Druckdifferenz. Die Druckdifferenz sorgt u.a. dafür, dass jeweils einzelne Körner von den Aussparungen 52 aufgenommen werden können. Anschließend können die aufgenommenen Körner durch Rotation des Dosierorgans 48 zu einem Kornabgabebereich 54 gefördert werden.

Die Dosiervorrichtungen 22 weisen je einen Kornabgabebereich 54 auf, d.h. es werden jeweils mittels der Dosiervorrichtungen 24, 26 unterschiedliche Saatgutsorten vereinzelt und durch Rotation der Dosierorgane 48 zum Kornabgabebereich 54 transportiert. Anschließend werden die von den Aussparungen 52 festgesetzten Körner durch Unterbrechung der Druckdifferenz mittels Unterbrechungselementen 58 in ein dem Kornabgabebereich 54 zugeordnetes Saatguteinlasselement 27 und/oder eine Saatgutdosierleitung 28 abgegeben. Die Unterbrechungselemente 58 können in Form von Rollen ausgebildet sein. Je nach Ausführungsform können die Unterbrechungselemente 58 abwechselnd tätig sein, so dass jeweils ein Korn aus dem ersten Kornabgabebereich und anschließend ein Korn aus dem zweiten Kornabgabebereich in die Saatgutdosierleitung 28 abgegeben wird. Auch könnte jeweils nur ein Unterbrechungselement 58 einer Kammer 44 aktiv sein, wodurch jeweils nur das gleiche Saatgut in den Boden abgegeben werden kann.

Wie die Kammern 44 kann auch der Kornabgabebereich 54 mit einem Druckniveau beaufschlagt werden. Im vorliegenden Ausführungsbeispiel erfolgt dies durch eine Wirkverbindung zwischen den Kammern 44 und dem Kornabgabebereich 54. Das bedeutet, es wird keine zusätzliche Luftversorgung benötigt und es herrscht in den Kammern 44 und im Kornabgabebereich 54 jeweils das weitgehend gleiche Druckniveau.

Durch das in wenigstens einem Kornabgabebereich 54 vorherrschende Druckniveau, entsteht aufgrund des geringeren vorherrschenden Drucks in der Saatgutdosierleitung 28 ein Luftstrom. Nach dem Lösen der Körner 46 vom Dosierorgan 48 werden diese von diesem Luftstrom aufgenommen. Dadurch können die Körner 46 in der Saatgutdosierleitung 28 eine aktive Beschleunigung erfahren. Zudem kann dadurch ein Verspringen der Körner 46 in der Saatgutdosierleitung 28 weitestgehend unterbunden bzw. derartig verringert werden, dass dies keinen bzw. nur noch einen vernachlässigbar geringen Einfluss auf die Ablagegenauigkeit hat.

Die Saatguteinlasselemente 27 sind jeweils in einem Winkel zum Dosierorgan 48 angeordnet, so dass deren Saatguteinlass 40 ebenso einen Winkel zu diesen aufweist. Um Störkanten oder dergleichen zu vermeiden und den Abstand zwischen Dosierorgan 48 und Saatguteinlass 40 so gering wie möglich zu gestalten, sind die Saatguteinlasselemente 27 auf der den Dosierorganen 48 zugeordneten Seite jeweils mit einer Fase versehen.

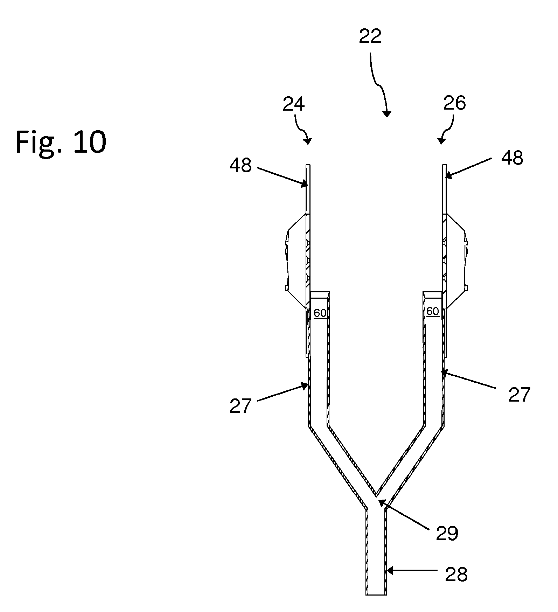

Die Figur 10 zeigt eine Vorderansicht des Dosiersystems 22 im Schnitt, bei der die Dosierorgane 48 die Saatguteinlasselemente 27 hinterschneiden. Durch eine derartige Anordnung werden Kanten zwischen den Dosierorganen 48 und den Saatguteinlasselementen 27 vermieden. Somit kann die Kornabgabe entsprechend verbessert werden. Weiter ist der Durchmesser der Saatguteinlasselemente 27 im Kornabgabebereich entsprechend der Hinterschneidung entsprechend groß, wodurch die Kornaufnahme durch die Saatguteinlasselemente 27 ebenfalls verbessert werden kann.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Reiheneinheit
- 12: Stützvorrichtung
- 14: Rahmen
- 16: Sechscheibe
- 18: Fangelement
- 20: Rolle
- 22: Dosiervorrichtungen
- 24: vordere Dosiervorrichtung
- 26: hintere Dosiervorrichtung
- 27: Saatgutleinasselement
- 28: Saatgutdosierleitung
- 29: Verbindungsstück
- 30: Gehäuse
- 32: Scharnier
- 34: Kornzuführung
- 36: Saatgutvorrat
- 38: Lufteinlass
- 40: Schieber
- 42: Motor
- 44: Kammer
- 46: Körner
- 48: Dosierorgan
- 50: Kurvenbahn
- 52: Aussparungen
- 54: Kornabgabebereich
- 56: Vereinzelungsvorrichtung, Vereinzelungselement
- 58: Ausdrückrolle
- 60: Saatguteinlass
- 62: bogenförmige Kontur
- 64: Führungselemente
- 66: geführte Luftströmung
- 68: senkrechte Luftströmung
- 70: Führungsbahn

## Patentansprüche

1. Dosiersystem (22) für eine Reiheneinheit (10) einer landwirtschaftlichen Maschine zur vereinzelten Abgabe von Körnern (46), wie Saatgut, Dünger oder dergleichen, umfassend
- wenigstens zwei Dosiervorrichtungen (24, 26), wobei die wenigstens zwei Dosiervorrichtungen (24, 26) wenigstens eine Kammer (44) zur Aufnahme der auszubringenden Körner (46) umfassen, und wobei in der wenigstens einen Kammer (44) ein definiertes Druckniveau oberhalb eines Umgebungsdrucks herrscht,
- wenigstens zwei Dosierorgane (48) zur Begrenzung der wenigstens einen Kammer (44), wobei die wenigstens zwei Dosierorgane (48) jeweils im Gehäuse (30) der wenigstens zwei Dosiervorrichtung (24, 26) drehbar angeordnet sind und in regelmäßigen Abständen auf einer Kurvenbahn Aussparungen (52) zur Aufnahme von Körnern (46) aufweisen,
- wenigstens einen Kornabgabebereich (54), welcher durch die wenigstens eine Kammer (44) und der wenigstens zwei Dosierorgane (48) definiert ist,
**dadurch gekennzeichnet, dass**
dem wenigstens einem Kornabgabebereich (54) mindestens ein Saatguteinlasselement (47) zur Aufnahme und Transport der vereinzelten Körner zu einer Saatgutdosierleitung (28) zur Abgabe der vereinzelten Körner (46) in einer mittels Bodenbearbeitungswerkzeugen erzeugten Saatfurche in den Boden zugeordnet ist,
wobei dem wenigstens einem Saatguteinlasselement (27) und/oder der Saatgutdosierleitung (28) eine Druckbeaufschlagungseinrichtung zugeordnet ist, mittels welcher wenigstens ein Luftstrom zur aktiven Beschleunigung der Körner (46) erzeugbar ist, und
wobei der wenigstens eine Kornabgabebereich (54) eine Luftverbindung zur wenigstens einen Kammer (44) und/oder zu einer Leitung der Luftversorgung wenigstens eine Kammer (44) und/oder zu einem Druckerzeugungsglied aufweist und/oder die Saatgutdosierleitung (28) in wenigstens eine Kammer (44) hinein ragt.

2. Dosiersystem nach Anspruch 1, bei welchem die Druckbeaufschlagungseinrichtung als Venturidüse und/oder Ringdüse ausgeführt ist.

3. Dosiersystem nach Anspruch 1 oder 2, bei dem die Dosiervorrichtungen (24, 26) nach einem Überdruckprinzip und/oder nach einem Unterdruckprinzip und/oder nach einem Fliehkraftprinzip arbeiten.

4. Dosiersystem nach einem der Ansprüche 1 bis 3, bei dem bei wenigstens zwei Kammern (44) jeweils zwei Saatguteinlasselemente (27) vorgesehen sind, die mittels eines Verbindungsstückes (29) zu einer Saatgutdosierleitung (28) zusammengeführt werden bzw. sind, wobei das Verbindungsstück Y-förmig ausgebildet ist.

5. Dosiersystem nach einem der Ansprüche 1 bis 4, bei dem die Dosierorgane (48) scheibenartig und/oder trommelartig und/oder tellerartig ausgebildet bzw. geformt sind, wobei die Aussparungen (52) jeweils als Bohrungen und/oder Langlöcher und/oder Schlitze ausgeführt sind.

6. Dosiersystem nach einem der Ansprüche 1 bis 5, bei dem die Aussparungen (52) entlang wenigstens einer Kurvenbahn (50) im Dosierorgan (48) angeordnet sind und das mindestens eine Saatguteinlasselement (27) zumindest abschnittsweise weitgehend tangential zu wenigstens einer der Kurvenbahnen (50) der wenigstens zwei Dosiervorrichtungen (24, 26) angeordnet ist.

7. Dosiersystem nach einem der Ansprüche 1 bis 6, bei dem die wenigstens zwei Dosiervorrichtungen (24; 26) ein gemeinsames Gehäuse (30) aufweisen und die wenigstens eine Kammer (44) durch eine Trennwand unterteilt ist.

8. Dosiersystem nach einem der Ansprüche 1 bis 7, bei dem den wenigstens zwei Dosiervorrichtungen (24, 26) ein Führungselement (64) zugeordnet ist, welches eine Führungsbahn (70) aufweist, die zumindest abschnittsweise parallel zur Saatgutdosierleitung (28) angeordnet ist und mittels welcher eine Richtungsänderung der Körner (46) aus einer kreisförmigen entlang einer Kurvenbahn (50) in eine weitestgehend lineare und/oder geführte Richtung in Richtung der Saatgutdosierleitung (28) hervorrufbar ist.

9. Dosiersystem nach einem der Ansprüche 1 bis 8, bei dem die wenigstens zwei Dosiervorrichtungen (24, 26) und/oder die wenigstens zwei Dosierorgane (48) weitestgehend spiegelbildlich und/oder jeweils um die eigene Achse gedreht und/oder parallel versetzt zueinander und/oder in einem Winkel zueinander und/oder in einer Kombination daraus zueinander angeordnet sind.

10. Dosiersystem nach einem der Ansprüche 1 bis 10, bei dem die wenigstens zwei Dosierorgane (48) mit unterschiedlicher und/oder gleicher Geschwindigkeit angetrieben werden bzw. antreibbar sind.

11. Dosiersystem nach einem der Ansprüche 1 bis 11, bei dem die Bewegung des wenigstens einen ersten Dosierorgans (48) auf das wenigstens eine zweite Dosierorgan (48) mittels Übertragungseinrichtungen übertragbar ist, vorzugsweise mittels Kupplungen und/oder Riemen und/oder Getriebe und/oder Zahnräder.

12. Dosiersystem nach einem der Ansprüche 1 bis 11, bei dem jeweils die Geschwindigkeiten der wenigstens zwei Dosierorgane (48) derartig abgestimmt sind, das bei einem Wechsel der vereinzelten Kornabgabe des wenigstens einen ersten Dosierorgans (48) auf das wenigstens eine zweite Dosierorgan (48) ein definierter Sollabstand zwischen den Kornabgaben eingehalten wird.

13. Dosiersystem nach einem der Ansprüche 1 bis 12, bei dem die Aussparungen (52) der Dosierorgane (48) der wenigstens zwei Dosiervorrichtungen (24, 26) jeweils bis unmittelbar vor das Unterbrechungselement und/oder bis zum Kornabgabebereich (54) mit Körnern (44) besetzt sind.

14. Dosiersystem nach einem der Ansprüche 1 bis 13, bei dem bei einer Umschaltung der vereinzelten Kornabgabe von einer Dosiervorrichtung (24; 26) auf eine andere Dosiervorrichtung (24, 26) das Dosierorgan (48) einer der Dosiervorrichtungen (24, 26) wenigstens kurzzeitig in die entgegengesetzte Richtung als das andere rotiert.

15. Dosiersystem nach einem der Ansprüche 1 bis 14, bei dem eine Umschaltung der vereinzelten Kornabgabe von einer Dosiervorrichtung (24, 26) auf eine andere Dosiervorrichtung (24, 26) auf Basis von GPS-Daten und/oder Positionserkennungssystemen und/oder mittels in einem Rechner hinterlegten Daten und/oder manuell erfolgt.

16. Dosiersystem nach einem der Ansprüche 1 bis 15, bei dem die wenigstens zwei Kammern (44) und/oder der Saatgutvorrat (36) mit unterschiedlichen Saatgutsorten versorgt werden.

17. Dosiersystem nach einem der Ansprüche 1 bis 16, bei dem die Saatgutdosierleitung (28) einen Saatguteinlass (60) aufweist, welcher die wenigstens zwei Dosierorgane (48) hinterschneidet und/oder dass der Abstand der Dosierorgane (48) zueinander geringer ist, als der Durchmesser und/oder die Breite der Saatgutdosierleitung (28).
